# EUROPÄISCHE PATENTSCHRIFT

(11) **EP 4 411 325 B1**
(45) Veröffentlichungstag und Bekanntmachung des Hinweises auf die Patenterteilung: **29.10.2025**
(21) Anmeldenummer: 23212184.8
(22) Anmeldetag: 27.11.2023
(51) Int. Cl.: G01F 1/60

(54) **VERFAHREN ZUM BETREIBEN EINES MAGNETISCH-INDUKTIVEN DURCHFLUSSMESSGERÄTS UND EIN ENTSPRECHENDES MAGNETISCH-INDUKTIVES DURCHFLUSSMESSGERÄT**
METHOD FOR OPERATING A MAGNETIC-INDUCTIVE FLOW METER AND A CORRESPONDING MAGNETIC-INDUCTIVE FLOW METER
PROCÉDÉ DE FONCTIONNEMENT D'UN DÉBITMÈTRE À INDUCTION MAGNÉTIQUE ET DÉBITMÈTRE À INDUCTION MAGNÉTIQUE CORRESPONDANT

(30) Priorität: 03.02.2023 DE 102023102673
(43) Veröffentlichungstag der Anmeldung: 07.08.2024
(73) Patentinhaber: Krohne Messtechnik GmbH, 47058 Duisburg (DE)
(72) Erfinder: Förster, Jan, 45149 Essen (DE)
(74) Vertreter: Gesthuysen Patentanwälte

(56) Entgegenhaltungen:
- US-A1- 2008 250 867
- US-A1- 2011 239 778
- US-A1- 2017 234 708
- US-A1- 2018 031 400
- US-A1- 2020 080 877
- US-A1- 2022 082 417
- US-B1- 6 615 149

## Beschreibung

Die Erfindung betrifft ein Verfahren zum Betreiben eines magnetisch-induktiven Durchflussmessgerätes mit einem Messrohr zum Führen eines Mediums, mit einer Magnetfelderzeugungsvorrichtung zum Erzeugen eines das Messrohr senkrecht zur Strömungsrichtung des Mediums durchsetzenden Magnetfeldes wechselnder Magnetfeldpolarität, mit einem Elektrodenpaar zum Abgreifen einer in dem Medium induzierten elektrischen Spannung als Messsignal, wobei aus dem Messsignal gewonnene Messdaten aus einem Zeitbereich in einen Frequenzbereich transformiert werden und das Messsignal zumindest zu einem Durchflussmesswert verarbeitet wird. Darüber hinaus betrifft die Erfindung auch ein magnetisch-induktives Durchflussmessgerät, das ferner eine Signalverarbeitungsvorrichtung aufweist, die aus dem Messsignal Messdaten gewinnt, die die Messdaten aus einem Zeitbereich in einen Frequenzbereich transformiert und wobei die Signalverarbeitungsvorrichtung das Messsignal zu einem Durchflussmesswert verarbeitet; das magnetisch-induktive Durchflussmessgerät führt also das zuvor genannte Verfahren durch.

Die zuvor genannten Durchflussmessgeräte, die auf dem magnetisch-induktiven Messprinzip beruhen, sind seit Jahrzehnten bekannt. Folglich sind auch Verfahren zum Betreiben solcher Durchflussmessgeräte, wie sie zuvor beschrieben worden sind, seit langem bekannt. Das magnetisch-induktive Messprinzip beruht auf der Kraftwirkung auf Ladungsträger, die sich senkrecht zu einem Magnetfeld bewegen bzw. die eine Bewegungskomponente senkrecht zu dem betreffenden Magnetfeld haben (Lorentzkraft). Um eine Durchflussmessung auf diesem Prinzip durchführen zu können, muss das in dem Messrohr geführte Medium eine gewisse elektrische Leitfähigkeit haben. Je schneller sich das Medium durch das Messrohr und damit auch durch das von der Magnetfelderzeugungsvorrichtung erzeugte Magnetfeld bewegt, desto stärker erfolgt eine Trennung von Ladungsträgern in dem strömenden Medium des entsprechenden Messrohrabschnitts, und umso stärker wird ein durch die Ladungstrennung bewirktes elektrisches Feld, das sich zwischen den Elektroden des Messrohrs ausbildet und als elektrische Spannung zwischen den Elektroden abgenommen werden kann. Die induzierte Spannung zwischen den Elektroden entwickelt sich proportional zur Strömungsgeschwindigkeit, jedenfalls in dem Zeitraum, in dem das Magnetfeld konstant ist und die Leitfähigkeit des Mediums bzw. die Ladungsträgerkonzentration in dem Medium gleichbleibend ist.

Auch wenn die grundlegenden Zusammenhänge des magnetisch-induktiven Messprinzips vollkommen klar sind, gibt es in der messtechnischen Praxis doch einige Hürden, die zu nehmen sind, bis ein Durchflussmessgerät vorliegt, das zuverlässige und eindeutige Durchflussinformationen liefert. Eine dieser Hürden ist, dass die in dem Medium induzierte elektrische Spannung als ein deutlich verrauschtes Messsignal an den Elektroden des Elektrodenpaares anliegt. Das Signal-Rausch-Verhältnis dieses verrauschten Messsignals ist im Regelfall so niedrig, dass sich eine zuverlässige und eindeutige Durchflussinformation aus dem verrauschten Messsignal nicht unmittelbar entnehmen lässt. Dieses Rauschen ist beispielsweise begründet durch elektrochemische Vorgänge an den Elektroden.

Um aus dem Messsignal einen tauglichen Durchflussmesswert zu erhalten, wird das Messsignal in einer Signalverarbeitungsvorrichtung verarbeitet, beispielsweise durch hochohmige Abtastung des Messsignals und durch Mittelwertbildung über eine Vielzahl von durch die Abtastung erhaltenen Messdaten. Dieser so gewonnene Durchflussmesswert wird dann üblicherweise angezeigt.

Aus dem Stand der Technik ist bekannt, zur Reduzierung der durch elektrochemische Vorgänge verursachten Störspannungen die Richtung des Magnetfeldes, also die Magnetfeldpolarität, beständig zu wechseln, sodass auch die in dem Medium induzierte Spannung ihre Richtung wechselt. Die nicht von dem Magnetfeld abhängigen und daher ihr Vorzeichen mit der Magnetfeldpolarität nicht ändernden Störspannungen können so herausgemittelt werden. Der Wechsel des Magnetfeldes wird mit einer bestimmten Wechselfrequenz durchgeführt. Dazu wird regelmäßig die Bestromungsrichtung der Spulen in der Magnetfelderzeugungsvorrichtung geändert. Aus dem Richtungswechsel folgt, dass das Messsignal und die aus dem Messsignal gewonnenen Messdaten einer Modulation unterliegen. Der Einfluss der Modulation führt prinzipbedingt zu Artefakten im Frequenzspektrum, wenn die Messdaten also einer Frequenzanalyse unterzogen werden.

Es ist aus der Offenlegungsschrift DE 10 2020 123 941 A1 bekannt, nur Messdaten für die Frequenzanalyse und die Ermittlung von Durchflussinformationen zu verwenden, die aus einem Zeitfenster stammen, in dem das Magnetfeld konstant ist. Die Messdaten, die aus Zeitbereichen eines konstanten Magnetfeldes erfasst worden sind, zeigen im Frequenzspektrum keine modulationsbedingten Artefakte. Ferner ist aus der Offenlegungsschrift bekannt, mehrere Frequenzspektren zu mitteln und so ein besseres Signal-Rausch-Verhältnis im Frequenzbereich zu erzielen. Mit den Informationen aus den Frequenzspektren lässt sich zum Beispiel die Validität von Durchflussmesswerten überprüfen. Aus der Offenlegungsschrift DE 10 2020 123 945 A1 ist bekannt, dass in einem Kalibrierschritt eines Verfahrens zur Durchflussmessung mehrere entrauschte Vergleichsdurchflusswerte aus verrauschten Rohsignalen berechnet werden. Für jeden dieser Werte wird ein zugehöriges Frequenzspektrum ermittelt, das die charakteristische Signalstruktur unter zuverlässigen Bedingungen abbildet. Diese Vergleichsfrequenzspektren dienen später als Referenz im Messbetrieb. Bei jeder neuen Messung wird das aktuelle Spektrum des Rohsignals mit den gespeicherten Referenzspektren verglichen. Aus der Abweichung wird ein Vertrauensindikator abgeleitet. Dadurch ermöglicht der Kalibrierschritt nicht nur die Optimierung der Messgenauigkeit, sondern auch eine kontinuierliche Bewertung der Zuverlässigkeit aktueller Messwerte während des Betriebs.

Da sich die durch Frequenzanalyse aus den Messdaten erhaltbaren Informationen als ausgesprochen nutzbringend herausgestellt haben, liegt der vorliegenden Erfindung die Aufgabe zugrunde, die Frequenzanalysen der Messdaten zu Verbessern, um weitergehende Information aus den Messdaten zu erhalten.

Die zuvor hergeleitete Aufgabe wird bei dem eingangs beschriebenen Verfahren zum Betreiben eines magnetisch-induktiven Durchflussmessgeräts zunächst und im Wesentlichen dadurch gelöst, dass aus dem Messsignal zumindest ein Messdatensatz mit polarisierten, von der Magnetfeldpolarität abhängigen Messdaten aus zeitlichen Bereichen unterschiedlicher Magnetfeldpolarität erzeugt wird und dass durch eine diskrete Frequenzanalyse des Messdatensatzes mit polarisierten Messdaten wenigstens ein magnetfeldunabhängiges Frequenzspektrum gewonnen wird. Weiterhin wird aus dem Messdatensatz mit polarisierten Messdaten zumindest ein Messdatensatz mit entpolarisierten Messdaten abgeleitet und durch eine diskrete Frequenzanalyse des Messdatensatzes mit entpolarisierten Messdaten wird wenigstens ein magnetfeldabhängiges Frequenzspektrum gewonnen.

Ferner ist erfindungsgemäß vorgesehen, dass in einem Auswertungsschritt durch Spitzenerkennung die Amplitudenwerte des magnetfeldunabhängigen Frequenzspektrums auf wenigstens ein magnetfeldunabhängiges Ereignis untersucht werden und/oder die Amplitudenwerte des magnetfeldabhängigen Frequenzspektrums auf wenigstens ein magnetfeldabhängiges Ereignis untersucht werden. Letztendlich wird bei Identifikation eines magnetfeldunabhängigen Ereignisses und/oder eines magnetfeldabhängigen Ereignisses das Vorliegen des Ereignisses signalisiert.

Bei dem erfindungsgemäßen magnetisch-induktiven Durchflussmessgerät ist das Verfahren implementiert durch entsprechende Ausgestaltung der Signalverarbeitungsvorrichtung, die dann so eingerichtet ist, dass sie im Betriebszustand die Messdatensätze aufnimmt bzw. erzeugt, die Frequenzanalysen durchführt sowie die zuvor geschilderte Spitzenerkennung, die Identifizierung eines oder mehrerer Ereignisse sowie schließlich das Signalisieren von vorliegenden Ereignissen vornimmt.

Mit dem erfindungsgemäßen Verfahren ist es auf geschickte Weise möglich, periodische Ereignisse in dem Messsignal nicht nur an sich zu erkennen, sondern auch danach zu unterscheiden, ob es sich um magnetfeldabhängige Ereignisse oder um magnetfeldunabhängige Ereignisse handelt. Erfindungsgemäß ist erkannt worden, dass sich in den Messdaten niederschlagende Ereignisse einteilen lassen in Ereignisse, die dem Magnetfeld folgen, also abhängig sind von der Magnetfeldpolarität, als auch in Ereignisse, die vom Magnetfeld unabhängig sind, also unabhängig sind von der Magnetfeldpolarität. Diese Abhängigkeit macht sich die vorliegende Erfindung zunutze. Damit die Abhängigkeit von der Magnetfeldpolarität in den Messdaten überhaupt genutzt werden kann, bedürfen die Messdaten einer gewissen Behandlung, sodass im Sprachgebrauch der vorliegenden Erfindung polarisierte Messdaten und entpolarisierte Messdaten vorliegen.

Der Messdatensatz mit polarisierten Messdaten umfasst mehrere Messdaten, die aus dem Messsignal gewonnen worden sind, und zwar auch aus Zeiten unterschiedlicher Magnetfeldpolarität. Beim Vorliegen einer Strömung, wovon bei den hier angestellten Überlegungen ausgegangen wird, wechselt das Messsignal sein - und damit auch die Messdaten ihre - Vorzeichen, deshalb wird in diesem Fall von polarisierten Messdaten gesprochen. Das Messsignal wird üblich dominiert von der Bewegung des Mediums und der dadurch in dem Medium induzierten Spannung. Das Messsignal kann aber auch einen Anteil enthalten, der nicht von der Magnetfeldpolarität abhängt und deshalb stets mit gleichem Vorzeichen in das Messsignal und damit die Messdaten eingeht. Wenn nun durch diskrete Frequenzanalyse auf Grundlage dieses Messdatensatzes mit polarisierten Messdaten ein Frequenzspektrum gewonnen wird, dann handelt es sich um ein magnetfeldunabhängiges Frequenzspektrum, da die magnetfeldabhängigen Beiträge in den Messdaten, wie zuvor erläutert, Vorzeichenwechsel aufweisen und ihre Beiträge in der Auswertung deshalb gedämpft sind. Die von der Magnetfeldpolarität unabhängigen Beitrage im Messsignal haben ein gleichbleibendes Vorzeichen in dem Messdatensatz mit polarisierten Messdaten, weshalb die Beiträge der von der Magnetfeldpolarität unabhängigen Effekte erhalten bleiben und deutlicher hervortreten.

Eine Idee der Erfindung besteht darin, aus dem Messdatensatz mit den polarisierten Messdaten einen Messdatensatz mit entpolarisierten Messdaten abzuleiten, bei dem also gerade die Anteile in den Messdaten, die von der Magnetfeldpolarität abhängen, diese Abhängigkeit nicht mehr aufweisen, und die Anteile in den Messdaten, die von der Magnetfeldpolarität unabhängig sind, jetzt eine solche Abhängigkeit aufweisen. Wenn auf Grundlage dieses Messdatensatzes mit den entpolarisierten Messdaten dann durch diskrete Frequenzanalyse ein Frequenzspektrum gewonnen wird, dann zeigt dieses magnetfeldabhängige Effekte und ist insoweit ein magnetfeldabhängiges Frequenzspektrum. Die magnetfeldunabhängigen Beiträge in den Messdaten weisen Vorzeichenwechsel auf, weshalb nun ihre Beiträge in der Auswertung stark gedämpft sind. Die von der Magnetfeldpolarität abhängigen Beiträge im Messsignal haben ein gleichbleibendes Vorzeichen in dem Messdatensatz mit entpolarisierten Messdaten, weshalb die Beiträge der von der Magnetfeldpolarität abhängigen Effekte erhalten bleiben und deutlicher hervortreten.

Die diskreten Frequenzanalysen werden bevorzugt durch Fast-Fourier-Analysen der Messdaten realisiert.

Eine bevorzugte Ausgestaltung des Verfahrens zeichnet sich dadurch aus, dass für die Ableitung des Messdatensatzes mit entpolarisierten Messdaten aus dem Messdatensatz mit polarisierten Messdaten die Messdaten des Messdatensatzes mit polarisierten Messdaten aus Zeiten einer bestimmten Magnetfeldpolarität mit -1 multipliziert werden. Durch diese Operation wird der Einfluss der Umkehr der Magnetfeldpolarität auf das Messsignal und damit auf die Messdaten aufgehoben, jedenfalls was die von der Magnetfeldpolarität abhängigen Effekte betrifft. Dafür erhalten jetzt aber die von der Magnetfeldpolarität unabhängigen Anteile in den Messdaten einen Vorzeichenwechsel.

Eine weitere Ausgestaltung des Verfahrens zeichnet sich dadurch aus, dass aus den Messdaten des Messdatensatzes mit polarisierten Messdaten wenigstens ein Gleichanteil berechnet wird und der Gleichanteil von den Messdaten des Messdatensatzes mit polarisierten Messdaten abgezogen wird. Insbesondere wird ein Gleichanteil für jeden zusammenhängenden zeitlichen Bereich einer bestimmten Magnetfeldpolarität berechnet und der Gleichanteil wird von den Messdaten aus genau diesem zusammenhängenden zeitlichen Bereich abgezogen. Alternativ kann ein Gleichanteil für mehrere zusammenhängende zeitliche Bereiche einer bestimmten Magnetfeldpolarität berechnet werden und der Gleichanteil von den Messdaten aus genau diesen zusammenhängenden zeitlichen Bereichen abgezogen werden. Durch das Abziehen des Gleichanteils der Messdaten verbleiben nur die eigentlich interessierenden Wechselanteile der in den Messdaten enthaltenen Informationen, das Signal-Rausch-Verhältnis wird damit verbessert. Das Abziehen des Gleichanteils für jeden zusammenhängenden zeitlichen Bereich einer bestimmten Magnetfeldpolarität hat gegenüber der Alternative - Bestimmung des Gleichanteils über mehrere zusammenhängende Bereiche einer Magnetfeldpolarität - den Vorteil der exakteren Bestimmung und Herausrechnung des Gleichanteils, speziell in Messsitiuationen mit stark veränderlichen Durchflüssen.

Vorzugsweise werden beide Messdatensätze von dem Gleichanteil bereinigt werden, um in beiden Messdatensätzen von einem verbesserten Signal-Rausch-Verhältnis profitieren zu können. Diesbezüglich zeichnet sich eine besonders bevorzugte Ausgestaltung des Verfahrens dadurch aus, dass der Messdatensatz mit entpolarisierten Messdaten aus dem Messdatensatz mit polarisierten Messdaten abgeleitet wird, nachdem der Gleichanteil von den Messdaten des Messdatensatzes mit polarisierten Messdaten abgezogen worden ist, sodass der Messdatensatz mit polarisierten Messdaten und der Messdatensatz mit entpolarisierten Messdaten beide bereinigt sind von einem Gleichanteil.

Bei einem vorteilhaften Ausführungsbeispiel des Verfahrens wird ein bestimmter Anteil an Messdaten nach Wechsel der Magnetfeldpolarität verworfen, zu null gesetzt oder er werden nach Wechsel der Magnetfeldpolarität für eine bestimmte Zeit keine Messdaten aus dem Messsignal erfasst. Im Besonderen werden die Messdaten verworfen, zu null gesetzt oder nicht erfasst, die in einen Zeitbereich eines transienten Magnetfeldverlaufes fallen. Der Zeitbereich des transienten Magnetfeldverlaufes gilt in der Regel als beendet, wenn 95 % der finalen Magnetfeldstärke erreicht sind (drei Zeitkonstanten bei einem System erster Ordnung, wie dem vorliegenden System der Magnetfelderzeugungsvorrichtung aus Spule und ohmschem Widerstand), bevorzugt wenn 98 % der finalen Magnetfeldstärke erreicht sind. Da die Magnetfeldpolarität aufgrund der vorhandenen Induktivitäten nicht instantan gewechselt werden kann, sondern stets ein Übergangsbereich vorliegt, in dem sich das Magnetfeld ab- und aufbaut, dabei seine Polarität ändert und schließlich wieder einen stationären Zustand annimmt, wird somit sichergestellt, dass nur Messdaten unter Wirkung eines konstanten Magnetfeldes verwendet werden, was erforderlich ist, um überhaupt vergleichbare Messdaten aus dem Messsignal gewinnen zu können.

Eine weitere Ausgestaltung des Verfahrens ist dadurch gekennzeichnet, dass die Anzahl von Messdaten in dem Messdatensatz mit polarisierten Messdaten und damit die Anzahl von Messdaten in dem Messdatensatz mit entpolarisierten Messdaten bestimmt wird aus einer gewünschten spektralen Auflösung des magnetfeldabhängigen Frequenzspektrums und des magnetfeldunabhängigen Frequenzspektrums sowie der Messsignal-Abtastrate, mit der die Messdaten aus dem Messsignal gewonnen werden. Dazu kann der Zusammenhang genutzt werden, dass die spektrale Auflösung einer diskreten Frequenzanalyse gleich dem Quotienten aus der Messsignal-Abtastrate und der Anzahl der für die Berechnung herangezogenen erfassten Messdaten ist. Vorzugsweise wird darauf geachtet, dass die Messsignal-Abtastrate und die Wechselfrequenz, mit der die Magnetfeldpolarität gewechselt wird, so aufeinander abgestimmt werden, dass die Messsignal-Abtastrate ein ganzzahliges Vielfaches der Wechselfrequenz der Magnetfeldpolarität ist. Die Verwendung von ganzzahligen Vielfachen der Wechselfrequenz als Messsignal-Abtastrate sorgt für eine Vermeidung von Störeffekten wie z. B. dem Leck-Effekt (leakage effect) in den berechneten Frequenzspektren.

Eine weitere bevorzugte Ausgestaltung des Verfahrens zeichnet sich dadurch aus, dass der Messdatensatz mit polarisierten und/oder mit entpolarisierten Messdaten mit einer Fensterfunktion zur Erzwingung weitestgehend sprungstellenfreier Übergänge zwischen den Messdaten aus dem Anfangsbereich und den Messdaten aus dem Endbereich eines den Frequenzanalysen zugrunde liegenden Messdatensatzes bearbeitet wird. Sprungstellen in den Übergängen der Messdatensätze führen zu Artefakten in den berechneten Frequenzspektren, was durch geeignete Fensterung deutlich vermindert werden kann. Die verwendete Fensterfunktion ist bevorzugt ein von-Hanning-Fenster oder ein Blackman-Fenster.

Eine bevorzugte Weiterbildung des Verfahrens ist dadurch gekennzeichnet, dass ein bei einer Ereignisfrequenz identifiziertes magnetfeldunabhängiges Ereignis im magnetfeldunabhängigen Frequenzspektrum einer Plausibilitätsprüfung unterzogen wird, indem überprüft wird, ob identifizierte oder identifizierbare benachbarte Ereignisse existieren, die von der Ereignisfrequenz des identifizierten magnetfeldunabhängigen Ereignisses einen Frequenzabstand von der doppelten Wechselfrequenz der Magnetfeldpolarität haben. Dieser Lehre liegt die Erkenntnis zugrunde, dass der Wechsel der Magnetfeldpolarität eine Modulation des Messsignals und damit der Messdaten darstellt. Der Anteil des Messsignals und damit der Messdaten, der der Magnetfeldpolarität nicht folgt, wird demnach mit einer kein Vorzeichenwechsel aufweisenden Rechteckfunktion moduliert. Das Frequenzspektrum dieser Rechteckfunktion hat im Amplitudenspektrum Beiträge bei Frequenzen, die dem geradzahlig Vielfachen der Wechselfrequenz der Umschaltung der Magnetfeldpolarität entsprechen.

Diese Modulation entspricht im Zeitbereich einer Multiplikation der Messdaten mit der Rechteckfunktion, im Frequenzbereich ist dies eine Faltung des magnetfeldunabhängigen Frequenzspektrums mit dem Frequenzspektrum der Rechteckfunktion. Im Ergebnis finden sich bei den Frequenzen, bei denen das magnetfeldunabhängige Frequenzspektrum einen Amplitudenbeitrag hat, jeweils das Frequenzspektrum der Rechteckfunktion wieder. Da die Amplituden der Beiträge im Frequenzspektrum der Rechteckfunktionen mit höheren Frequenzen stark abnehmen, ist die Überprüfung auf Amplitudenbeiträge im doppelten Frequenzabstand der Umschaltfrequenz der Magnetfeldpolarität am einfachsten. Die Amplituden bei höheren geradzahligen Vielfachen der Umschaltfrequenz (4-fach, 6-fach, usw.) fallen häufig so gering aus, dass die im Rauschen des Frequenzspektrums verschwinden und schlecht identifizierbar sind. Vor dem beschriebenen Hintergrund ist erkennbar, weshalb die Prüfung auf benachbarte Amplitudenbeiträge in dem genannten Frequenzabstand eine valide Überprüfung auf magnetfeldunabhängige Ereignisse darstellt. Lassen sich diese benachbarten Amplituden nicht identifizieren, ist das aufgefundene Ereignis kein Ereignis, das dem Magnetfeld nicht folgt. Insbesondere wird bei einem identifizierten magnetfeldunabhängigen Ereignis überprüft, ob die benachbarten Ereignisse symmetrisch zur Ereignisfrequenz des magnetfeldunabhängigen Ereignisses vorliegen.

Wen davon die Rede ist, dass auch überprüft wird, ob identifizierbare benachbarte Ereignisse existieren, dann ist damit gemeint, dass eine Spitzenerkennung gezielt auf die fraglichen Frequenzbereiche konzentriert werden kann, möglicherweise mit einer erhöhten Erkennungsempfindlichkeit.

Schlägt der Plausibilitätstest fehl, dann liegt ein anderes Ereignis vor, jedoch kein magnetfeldunabhängiges Ereignis, entsprechend wird die Signalisierung des Ereignisses angepasst.

Sinngemäß wird bei der Identifizierung von magnetfeldabhängigen Ereignissen vorgegangen. Wenn ein bei einer Ereignisfrequenz identifiziertes magnetfeldabhängiges Ereignis im magnetfeldabhängigen Frequenzspektrum vorliegt, dann wird im Rahmen der Plausibilitätsprüfung überprüft, ob identifizierte oder identifizierbare benachbarte Ereignisse existieren, die von der Ereignisfrequenz des identifizierten magnetfeldabhängigen Ereignisses einen Frequenzabstand von der einfachen Wechselfrequenz der Magnetfeldpolarität haben, insbesondere wobei bei einem identifizierten magnetfeldabhängigen Ereignis die benachbarten Ereignisse symmetrisch zur Ereignisfrequenz des magnetfeldabhängigen Ereignisses vorliegen. Der Anteil des Messsignals und damit der Messdaten, der der Magnetfeldpolarität folgt, wird mit einer Vorzeichenwechsel aufweisenden Rechteckfunktion moduliert. Das Frequenzspektrum dieser Rechteckfunktion hat im Amplitudenspektrum Beiträge bei Frequenzen, die dem ungeradzahlig Vielfachen der Wechselfrequenz der Umschaltung der Magnetfeldpolarität entsprechen. Auch hier sind die Amplituden bei den geringsten Frequenzabständen am größten, sodass auf Amplituden bei einem einfachen Abstand von der Ereignisfrequenz im Bereich der Umschaltfrequenz der Magnetfeldpolarität bei der Suche abgestellt wird. Die Beiträge bei höheren ungeradzahligen Vielfachen Frequenzabständen (3-fach, 5-fach) sind oft so gering, dass sie im Rauschen des Frequenzspektrums verschwinden und nur schwer zu detektieren sind. Grundsätzlich könnte aber auch nach solchen Beiträgen gesucht werden.

Eine Ausgestaltung des Verfahrens zeichnet sich dadurch aus, dass ein gemitteltes Frequenzspektrum durch Mittelung mehrerer magnetfeldabhängiger Frequenzspektren und/oder mehrerer magnetfeldunabhängiger Frequenzspektren berechnet wird und das gemittelte Frequenzspektrum vor Durchführung des Auswertungsschritts von dem magnetfeldabhängigen Frequenzspektrum und/oder von dem magnetfeldunabhängigen Frequenzspektrum subtrahiert wird. Mit der Subtraktion des gemittelten Frequenzspektrums von dem magnetfeldabhängigen Frequenzspektrum und/oder von dem magnetfeldunabhängigen Frequenzspektrum wird eine Basislinien-Korrektur durchgeführt. Aufgrund der Subtraktion weist das entstandene Frequenzspektrum ein besseres Signal-Rausch-Verhältnis auf, was die Spitzenerkennung vereinfacht.

Eine weitere bevorzugte Ausgestaltung des Verfahrens zeichnet sich dadurch aus, dass im Auswertungsschritt Amplitudenwerte identifizierter Ereignisse mit einer Ereignisfrequenz bei einem Vielfachen der Wechselfrequenz der Magnetfeldpolarität verglichen werden mit Fenster-Amplitudenwerten des Frequenzspektrums der durch den Wechsel der Magnetfeldpolarität realisierten Fensterfunktion. Ein identifiziertes Ereignis wird verworfen, wenn seine Amplitude kleiner ist als ein von dem Fenster-Amplitudenwert bei der Ereignisfrequenz abhängiger Grenzwert, insbesondere wobei der Grenzwert der Fenster-Amplitudenwert selbst ist. Mit dieser Vorgehensweise kann ausgeschlossen werden, dass durch die Fensterung hervorgerufene Artefakte fälschlicherweise als interessierende magnetfeldabhängige oder magnetfeldunabhängige Ereignisse identifiziert werden.

Das Verfahren muss nicht zu Gänze auf dem jeweiligen magnetisch-induktiven Durchflussmessgerät, um dessen Betrieb es geht, durchgeführt werden. Insbesondere können die Messdaten über eine Schnittstelle des magnetisch-induktiven Durchflussmessgeräts an eine externe Recheneinheit geschickt werden und dort können alle weiteren Berechnungen angestellt werden. Insbesondere kann auch der aktuelle Messdatensatz über eine mögliche Schnittstelle verschickt werden und die Ableitung des Messdatensatzes mit entpolarisierten Messdaten sowie die Berechnung der magnetfeldabhängigen und magnetfeldunabhängigen Frequenzspektren können mit einer externen Recheneinheit durchgeführt werden.

Auch können alle Verfahrensschritte des Auswertungsschritts extern des magnetisch-induktiven Durchflussmessgeräts durchgeführt werden. Entscheidend ist, dass schlussendlich eine Information über das Vorliegen eines magnetfeldabhängigen Ereignisses und/oder eines magnetfeldunabhängigen Ereignisses von dem magnetisch-induktiven Durchflussmessgerät signalisiert wird.

Die hergeleitete Aufgabe wird auch gelöst bei dem eingangs genannten magnetisch-induktiven Durchflussmessgerät, und zwar dadurch, dass die Signalverarbeitungsvorrichtung im Betriebszustand des magnetisch-induktiven Durchflussmessgeräts aus dem Messsignal zumindest einen Messdatensatz mit polarisierten, von der Magnetfeldpolarität abhängigen Messdaten aus zeitlichen Bereichen unterschiedlicher Magnetfeldpolarität erzeugt und dass die Signalverarbeitungsvorrichtung durch eine diskrete Frequenzanalyse des Messdatensatzes mit polarisierten Messdaten wenigstens ein magnetfeldunabhängiges Frequenzspektrum gewinnt.

Ebenfalls leitet die Signalverarbeitungsvorrichtung aus dem Messdatensatz mit polarisierten Messdaten zumindest einen Messdatensatz mit entpolarisierten Messdaten ab, wobei die Signalverarbeitungsvorrichtung durch eine diskrete Frequenzanalyse des Messdatensatzes mit entpolarisierten Messdaten wenigstens ein magnetfeldabhängiges Frequenzspektrum gewinnt.

Weiterhin untersucht die Signalverarbeitungsvorrichtung in einem Auswertungsschritt durch Spitzenerkennung die Amplitudenwerte des magnetfeldunabhängigen Frequenzspektrums auf wenigstens ein magnetfeldunabhängiges Ereignis und/oder die Amplitudenwerte des magnetfeldabhängigen Frequenzspektrums auf wenigstens ein magnetfeldabhängiges Ereignis. Identifiziert die Signalverarbeitungsvorrichtung ein magnetfeldunabhängiges und/oder ein magnetfeldabhängiges Ereignis, signalisiert sie das Vorliegen eines Ereignisses.

Eine Ausgestaltung des magnetisch-induktiven Durchflussmessgeräts sieht vor, dass zur Signalisierung des identifizierten Ereignisses ein entsprechendes Flag in einem Speicher der Signalverarbeitungsvorrichtung gesetzt oder auf einer Anzeige des magnetisch-induktiven Durchflussmessgeräts ein entsprechendes Signal angezeigt oder über eine Kommunikationsschnittstelle eine entsprechende Nachricht verschickt wird.

Im Einzelnen gibt es nun eine Vielzahl von Möglichkeiten, das erfindungsgemäße Verfahren zum Betreiben eines magnetisch-induktiven Durchflussmessgeräts und das entsprechende magnetisch-induktive Durchflussmessgerät auszugestalten und weiterzubilden. Dazu wird verwiesen, einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch ein magnetisch-induktives Durchflussmessgerät und ein Verfahren zum Betreiben eines solchen magnetisch-induktiven Durchflussmessgeräts,
- Fig. 2: den Einfluss unterschiedlicher Wechselfrequenzen auf die Frequenzanalyse mit gleichen Messdaten,
- Fig. 3a: schematisch den zeitlichen Verlauf des Messdatensatzes mit polarisierten Messdaten eines periodischen Signalanteils auf dem Messsignal mit der Umschaltung des Magnetfeldes,
- Fig. 3b: schematisch den zeitlichen Verlauf des Messdatensatzes mit entpolarisierten Messdaten eines periodischen Signalanteils auf dem Messsignal ohne die Umschaltung des Magnetfeldes,
- Fig. 4a: eine Frequenzanalyse des Messdatensatzes mit polarisierten Messdaten sowie Spitzenerkennung,
- Fig. 4b: eine Frequenzanalyse des Messdatensatzes mit entpolarisierten Messdaten sowie Spitzenerkennung,
- Fig. 5a: eine Frequenzanalyse des Messdatensatzes mit polarisierten Messdaten mit Basislinien-Korrektur,
- Fig. 5b: eine Frequenzanalyse des Messdatensatzes mit entpolarisierten Messdaten mit Basislinien-Korrektur.

In den Figuren sind in unterschiedlichen Aspekten dargestellt ein Verfahren 1 zum Betreiben eines magnetisch-induktiven Durchflussmessgeräts 2 und - ganz schematisch - auch ein entsprechendes Durchflussmessgerät 2, das eine Signalverarbeitungsvorrichtung 24 aufweist, mit deren Hilfe das ausführlich dargestellte Verfahren 1 tatsächlich ausgeführt wird.

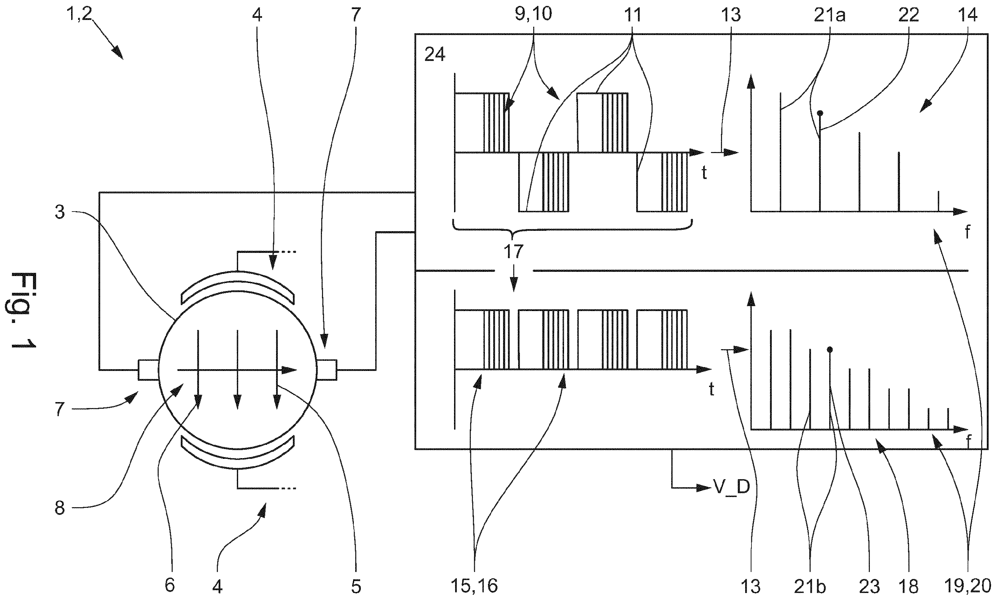

In Fig. 1 ist schematisch dargestellt, dass das Durchflussmessgerät 2 ein Messrohr 3 zum Führen eines Mediums aufweist sowie eine Magnetfelderzeugungsvorrichtung 4 zum Erzeugen eines das Messrohr 3 senkrecht zur Strömungsrichtung des Mediums durchsetzenden Magnetfeldes 5, wobei die Magnetfelderzeugungsvorrichtung 4 so angesteuert wird, dass das Magnetfeld 5 eine wechselnde Magnetfeldpolarität 6 aufweist. Das Durchflussmessgerät 2 weist ferner ein Elektrodenpaar 7 auf zum Abgreifen einer in dem Medium induzierten elektrischen Spannung als Messsignal 8. Aus dem Messsignal 8 werden - beispielsweise durch Abtastung mit einem A/D-Wandler - Messdaten 10 gewonnen. Das Messsignal 8 bzw. die Messdaten 10 werden zu einem Durchflussmesswert V_D verarbeitet, beispielsweise durch Mittelwertbildung über eine Mehrzahl von Messdaten.

Es ist auch bekannt, die gewonnenen Messdaten 10 aus einem Zeitbereich in einen Frequenzbereich zu transformieren und dort einer Frequenzanalyse zu unterziehen. Durch die Frequenzanalyse der Messdaten können Erkenntnisse über periodische Ereignisse im Medium gewonnen werden, sofern sich diese auf das Messsignal 8 auswirken. In Fig. 1 ist dieser Vorgang in dem oberen Diagramm in der Signalverarbeitungsvorrichtung 24 schematisch dargestellt. Das linke, über die Zeit t aufgetragene Diagramm zeigt die Gewinnung von Messdaten 10 aus dem Messsignal 8. Das Messsignal ändert beim Wechsel der Magnetpolarität 6 ebenfalls sein Vorzeichen, sodass Messsignale 8 bzw. Messdaten 10 unterschiedlicher Polarität resultieren, angedeutet durch die nach oben und unten weisenden Blöcke mit den Messdaten 10. Nach dem Wechseln der Magnetfeldpolarität 6 wird üblicherweise solange abgewartet mit der Erfassung weiterer Messdaten 10, bis das Magnetfeld 5 einen stationären Zustand erreicht hat, um Messdaten 10 zu gewinnen, die tatsächlich nur von der Mediumgeschwindigkeit abhängen und die nicht veränderlich sind, aufgrund einer wechselnden Stärke des Magnetfeldes 5.

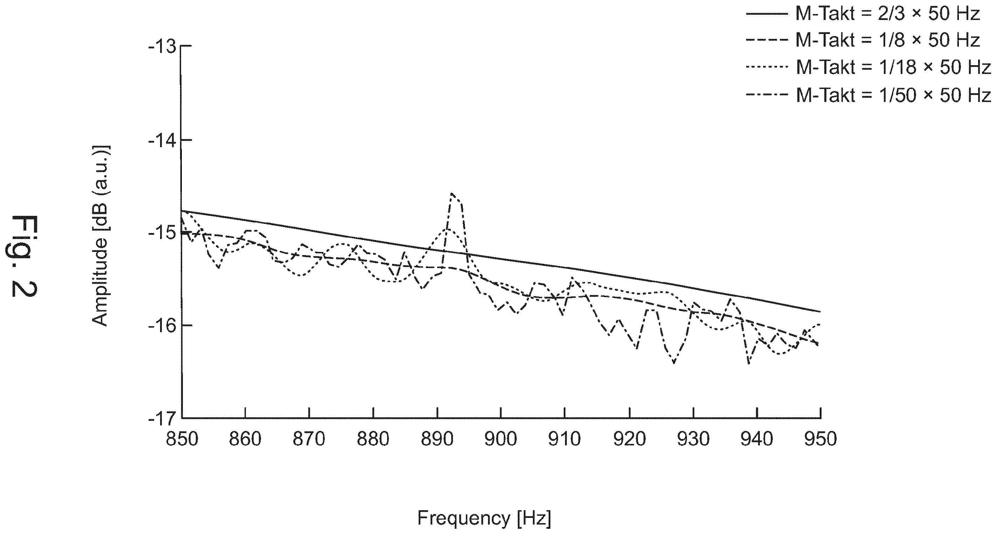

In der Darstellung in Fig. 1 sind jedenfalls drei Umschaltvorgänge dargestellt, die zu einer Änderung der Magnetfeldpolarität 6 führen. Die Magnetfeldpolarität 6 wird mit einer Wechselfrequenz M-Takt umgeschaltet. Häufig werden für eine Frequenzanalyse Messdaten 10 aus dem Zeitraum einer gleichen Magnetfeldpolarität 6 herangezogen, sodass die Anzahl der Messdaten 10 von der Wechselfrequenz M-Takt der Magnetfeldpolarität 6 abhängt, vorausgesetzt, dass die Abtastrate, mit der das Messsignal 8 abgetastet wird, konstant bleibt. Da die spektrale Auflösung eines durch diskrete Frequenzanalyse gewonnenen Frequenzspektrums gleich dem Quotienten aus der Messsignal-Abtastrate und der Anzahl der für die Berechnung herangezogenen erfassten Messdaten 10 ist und die Anzahl der erfassten Messdaten 10 in einem Zeitfenster gleicher Magnetfeldpolarität 6 von der Länge des Zeitfensters abhängt, hängt die spektrale Auflösung bei der beschriebenen Vorgehensweise von der Wechselfrequenz M-Takt der Magnetfeldpolarität 6 ab. Dies ist in Fig. 2 dargestellt. Dargestellt sind vier verschiedene Frequenzspektren, die bei vier verschiedenen Wechselfrequenzen M-Takt der Magnetfeldpolarität 6 erstellt worden sind aus den bei gleichbleibender Abtastrate aufgenommenen Messdaten 10. Es ist gut zu erkennen, dass die Anzahl von Messdaten - mehr Messdaten innerhalb eines zusammenhängenden Zeitraumes gleichbleibender Magnetfeldpolarität bei geringerer Wechselfrequenz M-Takt - einen erheblichen Einfluss auf die spektrale Auflösung der erhaltenen Frequenzspektren hat. Da in der Praxis gerne mit höheren Wechselfrequenzen M-Takt gearbeitet wird, lässt sich häufig keine spektrale Auflösung im Frequenzspektrum erreichen, die zu aussagekräftigen Ergebnissen führt.

Mit dem nachfolgend beschriebenen Verfahren 1 zum Betreiben eines magnetisch-induktiven Durchflussmessgeräts 2 und mit dem entsprechenden magnetisch-induktiven Durchflussmessgerät 2 können zum einen die Problematik der begrenzten spektralen Auflösung bei Verwendung von Messdaten 10 aus nur einem Zeitbereich konstanter Magnetfeldpolarität 6 gelöst werden. Zum anderen wird es mit bestimmten Maßnahmen ermöglicht, die in einem Frequenzspektrum erkennbar werdenden Ereignisse danach zu qualifizieren, ob sie von der Richtung des Magnetfeldes 5 abhängig sind (das sind häufig im Zusammenhang mit der Strömung des Mediums stehende Ereignisse) oder ob sie von der Magnetfeldpolarität 6 unabhängig sind.

Fig. 1 zeigt in einem Überblick das beanspruchte Verfahren 1 und das beanspruchte magnetisch-induktive Durchflussmessgerät 2. Aus dem Messsignal 8 wird ein Messdatensatz 9 mit polarisierten, von der Magnetfeldpolarität 6 abhängigen Messdaten 10 aus zeitlichen Bereichen 11 unterschiedlicher Magnetfeldpolarität 6 erzeugt. Durch eine diskrete Frequenzanalyse 13 des Messdatensatzes 9 mit polarisierten Messdaten 10 wird ein magnetfeldunabhängiges Frequenzspektrum 14 gewonnen.

Aus dem Messdatensatz 9 mit polarisieren Messdaten 10 wird ein Messdatensatz 15 mit entpolarisierten Messdaten 16 abgeleitet. Durch eine diskrete Frequenzanalyse 13 des Messdatensatzes 15 mit entpolarisierten Messdaten 16 wird schließlich ein magnetfeldabhängiges Frequenzspektrum 18 gewonnen.

Ein Vorteil des Verfahrens 1 liegt zunächst darin, dass Messdaten 10, 16 aus mehreren zeitlichen Bereichen 11 konstanter Magnetfeldpolarität 6 vorliegen und daher die Anzahl der für eine Frequenzanalyse 13 zur Verfügung stehenden Messdaten 10, 16 nicht begrenzt ist und auch nicht zwingend abhängig ist von der Wechselfrequenz M-Takt der Magnetfeldpolarität 6. Ein weiterer Vorzug des Verfahrens liegt darin, dass aus den Messdaten 10 durch entsprechende Behandlung der Messdatensatz 9 mit polarisierten, von der Magnetfeldpolarität 6 abhängigen Messdaten 10, und der Messdatensatz 15 mit entpolarisierten Messdaten 16 gewonnen werden. In dem allgemeinen Beschreibungsteil ist ausführlich erläutert worden, weshalb die Behandlung der Messdaten 10 dazu führt, dass bei Auswertung des Messdatensatzes 9 mit von der Magnetfeldpolarität 6 abhängigen Messdaten 10 ein magnetfeldunabhängiges Frequenzspektrum 14 gewonnen wird, aus dem magnetfeldunabhängige Ereignisse 22 erkennbar sind, und weshalb aus dem Messdatensatz 15 mit entpolarisierten Messdaten 16 ein magnetfeldabhängiges Frequenzspektrum 18 resultiert, aus dem magnetfeldabhängige Ereignisse 23 identifiziert werden können.

Schließlich werden in einem Auswertungsschritt 19 durch Spitzenerkennung 20 die Amplitudenwerte 21a des magnetfeldunabhängigen Frequenzspektrums 14 auf wenigstens ein magnetfeldunabhängiges Ereignis 22 untersucht und/oder es werden die Amplitudenwerte 21b des magnetfeldabhängigen Frequenzspektrums 18 auf wenigstens ein magnetfeldabhängiges Ereignis 23 untersucht. Bei Identifikation eines magnetfeldunabhängigen Ereignisses 22 und/ oder eines magnetfeldabhängigen Ereignisses 23 wird das Vorliegen dieses Ereignisses 22, 23 signalisiert.

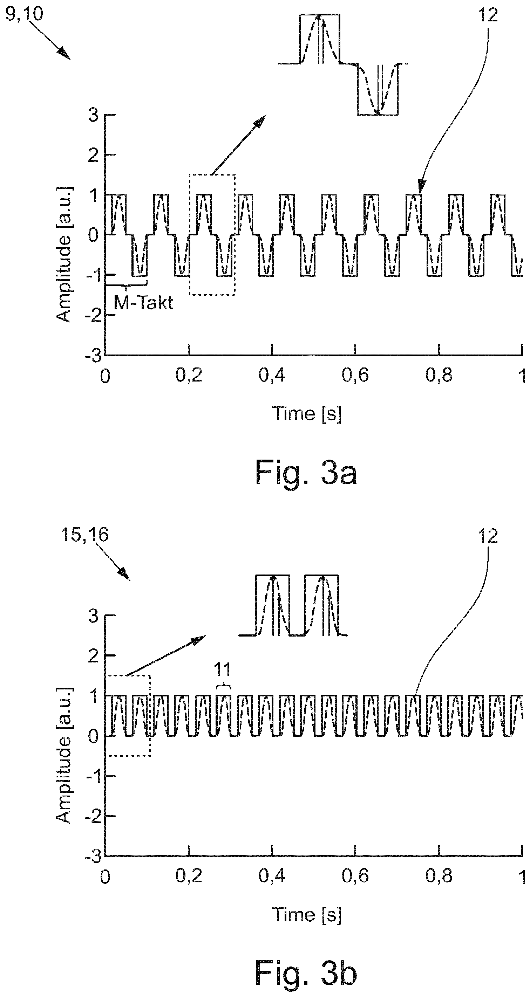

In den Fig. 3a und 3b ist in größerem Detail dargestellt, welche Bedeutung die Umschaltung des Magnetfeldes 5 bzw. der Magnetfeldpolarität 6 mit der Wechselfrequenz M-Takt auf die Messung hat.

In Fig. 3a ist der Fall dargestellt von Anteilen im Messsignal, die der Magnetfeldpolarität 6 folgen. Die polarisierten Messdaten 10 ändern ihr Vorzeichen mit dem Wechsel der Magnetfeldpolarität 6. Die durchgezogene Linie zeigt den Verlauf der Messfenster 12, in denen Messdaten 10 aufgenommen werden, in denen also das Messsignal 8 abgetastet wird, was in der Ausschnittsvergrößerung angedeutet ist. Die Umschaltung der Magnetfeldpolarität 6 und die entsprechend zeitlich begrenzte Abtastung des Messsignals 8 in den Messfenstern 12 ist eine Fensterung der Messdaten 10 mit dem seine Polarität ebenfalls wechselnden Rechtecksignal, das die Messfenster 12 beschreibt. Das Frequenzspektrum dieser Fensterung hat Beiträge bei ungeradzahlig Vielfachen der Wechselfrequenz M-Takt. Diese Frequenzen finden sich aufgrund der Multiplikation mit dem eigentlichen Messsignal im Zeitbereich, entsprechend einer Faltung im Frequenzbereich, bei den Ereignisfrequenzen der magnetfeldunabhängigen Ereignisse 22 wieder.

Fig. 3b zeigt die Wirkung der Magnetfeldumschaltung mit der Wechselfrequenz M-Takt auf Anteile des Messsignals, die nicht mit der Magnetfeldpolarität 6 wechseln, also nicht von dem Magnetfeld 5 abhängig sind. Hier liegt eine Fensterung vor, die keinen Vorzeichenwechsel aufweist. Das mit einer solchen Fensterung verbundene Frequenzspektrum hat Amplitudenbeiträge bei geradzahligen Vielfachen der Wechselfrequenz M-Takt. Aufgrund der Faltung des Frequenzspektrums dieser Rechteckfunktion mit dem magnetfeldunabhängigen Frequenzspektrum 18 erscheinen die typischen Frequenzspektren der Rechteckfunktion an den Ereignisfrequenzen des magnetfeldabhängigen Frequenzspektrums 18.

Die hier dargestellte Realisierung des Verfahrens 1 zeichnet sich dadurch aus, dass der Messdatensatz 9 mit polarisierten Messdaten 10 und der Messdatensatz 15 mit entpolarisierten Messdaten 16 mit einer Fensterfunktion zur Erzwingung weitestgehend sprungstellenfreier Übergänge zwischen den Messdaten 10, 16 aus dem Anfangsbereich und den Messdaten 10,16 aus dem Endbereich eines den Frequenzanalysen 13 zugrunde liegenden Messdatensatzes 9, 15 bearbeitet wird, wobei vorliegend ein von-Hanning-Fenster angewendet wird. Dieses Fenster ist in den Fig. 3a und 3b dargestellt durch die gestrichelte Linie.

Bei dem hier dargestellten Verfahren 1 ist ferner realisiert, dass aus den Messdaten 10 des Messdatensatzes 9 mit polarisierten Messdaten 10 ein Gleichanteil berechnet wird und der Gleichanteil von den Messdaten 10 des Messdatensatzes 9 mit polarisierten Messdaten abgezogen wird. Dadurch wird das Signal-Rausch-Verhältnis erhöht, da die eigentlich nur interessierenden Wechselanteile in den Messdaten erhalten bleiben. Der Messdatensatz 15 mit entpolarisierten Messdaten 16 wird aus dem Messdatensatz 9 mit polarisierten Messdaten 10 abgeleitet 17, nachdem der Gleichanteil von den Messdaten 10 des Messdatensatzes 9 mit polarisierten Messdaten abgezogen worden ist mit dem Ergebnis, dass der Messdatensatz 9 mit polarisierten Messdaten 10 und den Messdatensatz 15 mit entpolarisierten Messdaten 16 beide bereinigt sind von diesem Gleichanteil.

Aus Fig. 3 ist ersichtlich, dass die Messfenster 12, in denen tatsächlich Messdaten 10,16 aufgenommen werden, nicht den gesamten Zeitbereich ausfüllen, sondern nur einen Teil davon. Das hat damit zu tun, dass nach Wechsel der Magnetfeldpolarität 6 für eine bestimmte Zeit keine Messdaten 10 aus dem Messsignal 8 erfasst werden, nämlich genau die Messdaten, die in einem zeitlichen Bereich 11 eines transienten Magnetfeldverlaufs fallen, in dem also das Magnetfeld in alter Magnetfeldpolarität 6 abgebaut und das neue Magnetfeld in neuer Magnetfeldpolarität 6 aufgebaut wird.

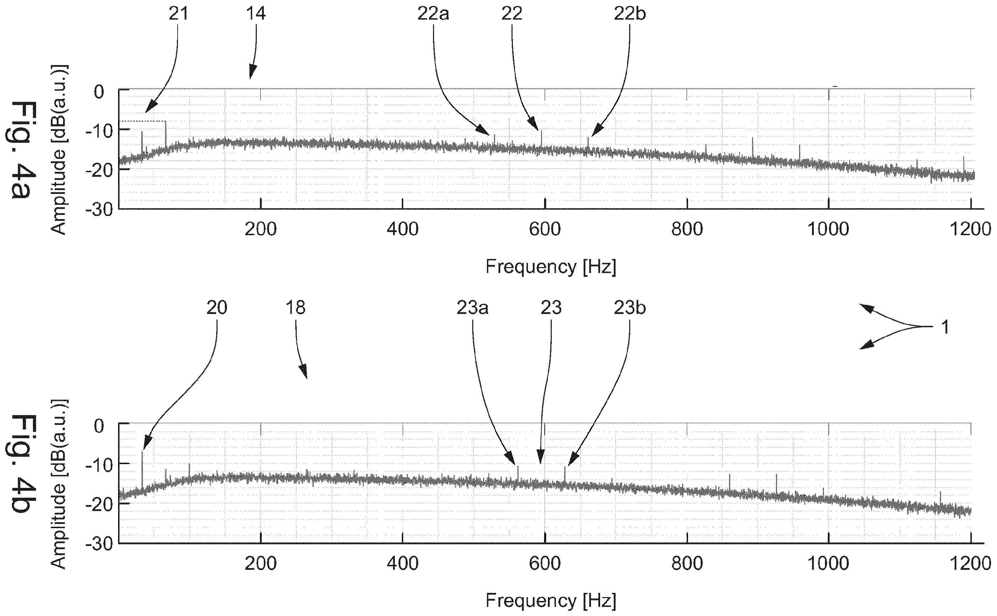

In den Fig. 4a und 4b sind ein magnetfeldunabhängiges Frequenzspektrum 14 (Fig. 4a) und ein magnetfeldabhängiges Frequenzspektrum 18 (Fig. 4b) dargestellt. In dem dargestellten Beispiel ist mit einer Wechselfrequenz M-Takt von etwa 33 Hz gearbeitet worden. In Fig. 4a sind beispielsweise markante Amplituden erkennbar bei etwa 528 Hz, 595 Hz und 662 Hz. Die erkennbaren Amplituden bei den Frequenzen von etwa 528 Hz und 662 Hz sind von dem Ereignis 22 bei etwa 595 Hz also um die doppelte Wechselfrequenz M-Takt des Magnetfeldes 5 beabstandet. Daraus kann geschlossen werden, dass es sich bei dem Ereignis 22 bei der Frequenz 595 Hz tatsächlich um ein magnetfeldunabhängiges Ereignis 22 handelt. Bei der vorliegenden Realisierung des Verfahrens 1 ist daher realisiert, dass ein bei einer Ereignisfrequenz (hier 595Hz) identifiziertes magnetfeldunabhängiges Ereignis 22 im magnetfeldunabhängigen Frequenzspektrum 14 einer Plausibilitätsprüfung unterzogen wird, indem überprüft wird, ob identifizierte oder identifizierbare benachbarte Ereignis 22a, 22b existieren, die von der Ereignisfrequenz (595 Hz) des identifizierten magnetfeldunabhängigen Ereignisses 22 einen Frequenzabstand von der doppelten Wechselfrequenz M-Takt der Magnetfeldpolarität 6 haben. Ein weiteres magnetfeldunabhängiges Ereignis ist auch bei etwa 890 Hz zu erkennen. Es könnte auch auf Ereignisse in einem anderen Frequenzabstand abgestellt werden, der ein geradzahlig Vielfaches der Wechselfrequenz M-Takt der Magnetfeldpolarität 6 beträgt, jedoch nehmen die Amplituden mit zunehmendem Frequenzabstand stark ab, sodass eine Spitzenerkennung dann sehr problematisch wird.

In Fig. 4b sind im doppelten Frequenzabstand von M-Takt zwei Amplitudenbeiträge 23a und 23b erkennbar, es fehlt hier jedoch an einem erkannten magnetfeldabhängigen Ereignis 23, denn an der Stelle von etwa 595 Hz gibt es keinen Amplitudenbeitrag, der dann einen einfachen Frequenzabstand jeweils zu den Ereignissen 23a und 23b hätte. Daran kann erkannt werden, dass kein magnetfeldabhängiges Ereignis vorliegt. Läge ein magnetfeldabhängiges Ereignis 23 vor, gebe es im magnetfeldabhängigen Frequenzspektrum 18 ein zentrales Ereignis mit einem Amplitudenbeitrag (beispielsweise bei 595 Hz), dafür würde dieser Amplitudenbeitrag im magnetfeldunabhängigen Frequenzspektrum 14 bei 595 Hz fehlen. Das bedeutet, dass bei dem hier implementierten Verfahren 1 ebenfalls realisiert ist, dass ein bei einer Ereignisfrequenz identifiziertes magnetfeldabhängiges Ereignis 23 im magnetfeldabhängigen Frequenzspektrum einer Plausibilitätsprüfung unterzogen wird, indem überprüft wird, ob identifizierte oder identifizierbare benachbarte Ereignisse 23a, 23b existieren, die von der Ereignisfrequenz des identifizierten magnetfeldabhängigen Ereignisses 23 ein Frequenzabstand von der einfachen Wechselfrequenz M-Takt der Magnetfeldpolarität 6 haben.

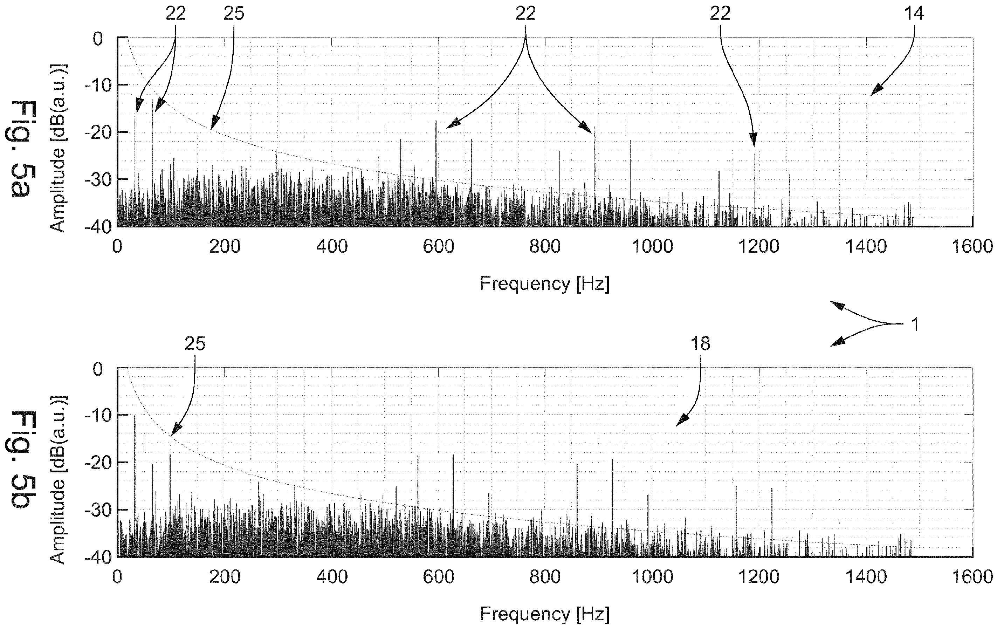

In den Fig. 5a und 5b sind die Frequenzspektren in den Fig. 4a und 4b einer Basislinien-Korrektur unterzogen worden, indem zunächst ein gemitteltes Frequenzspektrum erzeugt worden ist. Dies geschieht durch Mittelung einer Mehrzahl von magnetfeldabhängigen Frequenzspektren 18 oder durch Mittelung einer Mehrzahl von magnetfeldunabhängigen Frequenzspektren 14. Vorzugsweise werden die für die Mittelung herangezogenen Frequenzspektren gewonnen auf Grundlage von Messdaten, die aus nur einem einzigen zeitlichen Bereich einer konstanten Magnetfeldstärke stammen und die daher aufgrund der geringeren Anzahl an Messdaten auch nur eine geringere spektrale Auflösung haben. So ist in dem hier dargestellten Beispiel verfahren worden. Das gemittelte Frequenzspektrum wird vor Durchführung des Auswertungsschritts 19 von dem magnetfeldabhängigen Frequenzspektrum 18 und von dem magnetfeldunabhängigen Frequenzspektrum 14 subtrahiert. Dadurch werden die übrigen Amplituden auf eine gemeinsame Basislinie normiert und sind als Ausschläge im Frequenzspektrum deutlich besser erkennbar und auch durch eine Spitzenerkennung 20 besser detektierbar.

Darüber hinaus ist in Fig. 5 noch eine weitere Verfeinerung des Verfahrens dargestellt, die im Zusammenhang steht mit den Fenster-Amplitudenwerten 25 des Frequenzspektrums der durch den Wechsel der Magnetfeldpolarität 6 realisierten Fensterfunktion. In diesem Zusammenhang werden im Auswertungsschritt 19 Amplitudenwerte identifizierter Ereignisse 22, 23 mit einer Ereignisfrequenz bei einem Vielfachen der Wechselfrequenz M-Takt der Magnetfeldpolarität 6 verglichen mit Fenster-Amplitudenwerten 25 des Frequenzspektrums der durch den Wechsel der Magnetfeldpolarität 6 realisierten Fensterfunktion. Ein identifiziertes Ereignis 22, in Fig. 5a die beiden Amplituden ganz links im Diagramm, wird verworfen, wenn seine Amplitude kleiner ist als ein von dem Fenster-Amplitudenwert 25 bei der Ereignisfrequenz abhängiger Grenzwert, der im vorliegenden Fall der Fenster-Amplitudenwert 25 selbst ist. Dieser Überprüfung liegt die Überlegung zugrunde, dass nur bei Amplitudenwerten, die größer sind als die Fenster-Amplitudenwerte 25, sichergestellt werden kann, dass die Beiträge nicht ausschließlich durch die Fensterfunktion selbst verursacht worden sind.

### Bezugszeichen

- 1: Verfahren
- 2: Durchflussmessgerät
- 3: Messrohr
- 4: Magnetfelderzeugungsvorrichtung
- 5: Magnetfeld
- 6: Magnetfeldpolarität
- 7: Elektrodenpaar
- 8: Messsignal
- 9: Messdatensatz mit polarisierten Messdaten
- 10: polarisierte Messdaten
- 11: zeitliche Bereiche
- 12: Messfenster
- 13: diskrete Frequenzanalyse
- 14: magnetfeldunabhängiges Frequenzspektrum
- 15: Messdatensatz mit entpolarisierten Messdaten
- 16: entpolarisierte Messdaten
- 17: ableiten des Messdatensatzes mit entpolarisierten Messdaten
- 18: magnetfeldabhängiges Frequenzspektrum
- 19: Auswertungsschritt
- 20: Spitzenerkennung
- 21a: Amplitudenwerte d. magnetfeldunabh. Frequenzspektrums
- 21b: Amplitudenwerte d. magnetfeldabhängigen Frequenzspektrums
- 22: magnetfeldunabhängiges Ereignis
- 22a, b: magnetfeldunabhängiges Ereignis a, b
- 23: magnetfeldabhängiges Ereignis
- 23a, b: magnetfeldabhängiges Ereignis a, b
- 24: Signalverarbeitungsvorrichtung
- 25: Fenster-Amplitudenkennlinie

- V_D: Durchflussmesswert
- M-Takt: Wechselfrequenz

## Patentansprüche

1. Verfahren (1) zum Betreiben eines magnetisch-induktiven Durchflussmessgerätes (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes (5) wechselnder Magnetfeldpolarität (6), mit einem Elektrodenpaar (7) zum Abgreifen einer in dem Medium induzierten elektrischen Spannung als Messsignal (8), wobei aus dem Messsignal (8) gewonnene Messdaten (10) aus einem Zeitbereich in einen Frequenzbereich transformiert werden und das Messsignal (8) zumindest zu einem Durchflussmesswert (V_D) verarbeitet wird,
**dadurch gekennzeichnet,**
**dass** aus dem Messsignal (8) zumindest ein Messdatensatz (9) mit polarisierten, von der Magnetfeldpolarität (6) abhängigen Messdaten (10) aus zeitlichen Bereichen (11) unterschiedlicher Magnetfeldpolarität (6) erzeugt wird, dass durch eine diskrete Frequenzanalyse (13) des Messdatensatzes (9) mit polarisierten Messdaten (10) wenigstens ein magnetfeldunabhängiges Frequenzspektrum (14) gewonnen wird, dass aus dem Messdatensatz (9) mit polarisierten Messdaten (10) zumindest ein Messdatensatz (15) mit entpolarisierten Messdaten (16) abgeleitet (17) wird, dass durch eine diskrete Frequenzanalyse (13) des Messdatensatzes (15) mit entpolarisierten Messdaten (16) wenigstens ein magnetfeldabhängiges Frequenzspektrum (18) gewonnen wird,
**dass** in einem Auswertungsschritt (19) durch Spitzenerkennung (20) die Amplitudenwerte (21a) des magnetfeldunabhängigen Frequenzspektrums (14) auf wenigstens ein magnetfeldunabhängiges Ereignis (22) untersucht werden und/oder die Amplitudenwerte (21b) des magnetfeldabhängigen Frequenzspektrums (18) auf wenigstens ein magnetfeldabhängiges Ereignis (23) untersucht werden und dass bei Identifikation eines magnetfeldunabhängigen Ereignisses (22) und/oder eines magnetfeldabhängigen Ereignisses (23) das Vorliegen des Ereignisses (22, 23) signalisiert wird.

2. Verfahren (1) nach Anspruch 1, **dadurch gekennzeichnet, dass** für die Ableitung (17) des Messdatensatzes (15) mit entpolarisierten Messdaten (16) aus dem Messdatensatz (9) mit polarisierten Messdaten (10) die Messdaten (10) des Messdatensatzes (9) mit polarisierten Messdaten (10) aus Zeiten einer bestimmten Magnetfeldpolarität (6) mit -1 multipliziert werden.

3. Verfahren (1) nach Anspruch 1 oder 2, **dadurch gekennzeichnet, dass** aus den Messdaten (10) des Messdatensatzes (9) mit polarisierten Messdaten (10) wenigstens ein Gleichanteil berechnet wird und der Gleichanteil von den Messdaten (10) des Messdatensatzes (9) mit polarisierten Messdaten (10) abgezogen wird, insbesondere wobei ein Gleichanteil für jeden zusammenhängenden zeitlichen Bereich (11) einer bestimmten Magnetfeldpolarität (6) berechnet wird und der Gleichanteil von den Messdaten (10) aus genau diesem zusammenhängenden zeitlichen Bereich abgezogen wird, oder wobei ein Gleichanteil für mehrere zusammenhängende zeitliche Bereiche (11) einer bestimmten Magnetfeldpolarität (6) berechnet wird und der Gleichanteil von den Messdaten (10) aus genau diesen zusammenhängenden zeitlichen Bereichen abgezogen wird.

4. Verfahren (1) nach Anspruch 3, **dadurch gekennzeichnet, dass** der Messdatensatz (15) mit entpolarisierten Messdaten (16) aus dem Messdatensatz (9) mit polarisierten Messdaten (10) abgeleitet (17) wird nachdem der Gleichanteil von den Messdaten (10) des Messdatensatzes (9) mit polarisierten Messdaten (10) abgezogen worden ist, sodass der Messdatensatz (9) mit polarisierten Messdaten (10) und der Messdatensatz (15) mit entpolarisierten Messdaten (16) beide bereinigt sind von einem Gleichanteil.

5. Verfahren (1) nach einem der Ansprüche 1 bis 4, **dadurch gekennzeichnet, dass** ein bestimmter Anteil an Messdaten (10) nach Wechsel der Magnetfeldpolarität (6) verworfen wird oder zu null gesetzt wird oder nach Wechsel der Magnetfeldpolarität (6) für eine bestimmte Zeit keine Messdaten (10) aus dem Messsignal (8) erfasst werden, insbesondere wobei die Messdaten (10) verworfen, zu null gesetzt oder nicht erfasst werden, die in einen zeitlichen Bereich (11) eines transienten Magnetfeldverlaufes fallen, insbesondere wobei der zeitliche Bereich (11) des transienten Magnetfeldverlaufes als beendet gilt, wenn 95 % der finalen Magnetfeldstärke erreicht sind, bevorzugt wenn 98 % der finalen Magnetfeldstärke erreicht sind.

6. Verfahren (1) nach einem der Ansprüche 1 bis 5, **dadurch gekennzeichnet, dass** die Anzahl von Messdaten (10) in dem Messdatensatz (9) mit polarisierten Messdaten (10) und damit die Anzahl von Messdaten (16) in dem Messdatensatz (15) mit entpolarisierten Messdaten (16) bestimmt wird aus einer gewünschten spektralen Auflösung des magnetfeldabhängigen Frequenzspektrums (18) und des magnetfeldunabhängigen Frequenzspektrums (14) sowie der Messsignal-Abtastrate, mit der die Messdaten (10) aus dem Messsignal (8) gewonnen werden, insbesondere wobei die Messsignal-Abtastrate und eine Wechselfrequenz (M-Takt), mit der die Magnetfeldpolarität (6) gewechselt wird, so aufeinander abgestimmt werden, dass die Messsignal-Abtastrate ein ganzzahliges Vielfaches der Wechselfrequenz (M-Takt) der Magnetfeldpolarität (6) ist.

7. Verfahren (1) nach einem der Ansprüche 1 bis 6, **dadurch gekennzeichnet, dass** der Messdatensatz (9) mit polarisierten Messdaten (10) und/oder der Messdatensatz (15) mit entpolarisierten Messdaten (16) mit einer Fensterfunktion zur Erzwingung weitestgehend sprungstellenfreier Übergänge zwischen den Messdaten (10,16) aus dem Anfangsbereich und den Messdaten (10,16) aus dem Endbereich eines den Frequenzanalysen (13) zugrunde liegenden Messdatensatzes (9, 15) bearbeitet wird, wobei als Fensterfunktion bevorzugt das von-Hanning-Fenster oder das Blackman-Fenster angewandt wird.

8. Verfahren (1) nach einem der Ansprüche 1 bis 7, **dadurch gekennzeichnet, dass** ein bei einer Ereignisfrequenz identifiziertes magnetfeldunabhängiges Ereignis (22) im magnetfeldunabhängigen Frequenzspektrum (14) einer Plausibilitätsprüfung unterzogen wird, indem überprüft wird, ob identifizierte oder identifizierbare benachbarte Ereignisse (22a. 22b) existieren, die von der Ereignisfrequenz des identifizierten magnetfeldunabhängigen Ereignisses (22) einen Frequenzabstand von der doppelten Wechselfrequenz (M-Takt) der Magnetfeldpolarität (6) haben, insbesondere wobei bei einem identifizierten magnetfeldunabhängigen Ereignis (22) die benachbarten Ereignisse (22a, 22b) symmetrisch zur Ereignisfrequenz des magnetfeldunabhängigen Ereignisses (22) vorliegen.

9. Verfahren (1) nach einem der Ansprüche 1 bis 8, **dadurch gekennzeichnet, dass** ein bei einer Ereignisfrequenz identifiziertes magnetfeldabhängiges Ereignis (23) im magnetfeldabhängigen Frequenzspektrum (18) einer Plausibilitätsprüfung unterzogen wird, indem überprüft wird, ob identifizierte oder identifizierbare benachbarte Ereignisse (23a. 23b) existieren, die von der Ereignisfrequenz des identifizierten magnetfeldabhängigen Ereignisses (23) einen Frequenzabstand von der einfachen Wechselfrequenz (M-Takt) der Magnetfeldpolarität (6) haben, insbesondere wobei bei einem identifizierten magnetfeldabhängigen Ereignis (23) die benachbarten Ereignisse (23a, 23b) symmetrisch zur Ereignisfrequenz des magnetfeldabhängigen Ereignisses (23) vorliegen.

10. Verfahren (1) nach einem der Ansprüche 1 bis 9, **dadurch gekennzeichnet, dass** ein gemitteltes Frequenzspektrum durch Mittelung einer Mehrzahl von magnetfeldabhängigen Frequenzspektren (18) und/oder durch Mittelung einer Mehrzahl von magnetfeldunabhängigen Frequenzspektren (14) berechnet wird und das gemittelte Frequenzspektrum vor Durchführung des Auswertungsschritts (19) von dem magnetfeldabhängigen Frequenzspektrum (18) und/oder von dem magnetfeldunabhängigen Frequenzspektrum (14) subtrahiert wird.

11. Verfahren (1) nach einem der Ansprüche 1 bis 10, **dadurch gekennzeichnet, dass** im Auswertungsschritt (19) Amplitudenwerte identifizierter Ereignisse (22, 23) mit einer Ereignisfrequenz bei einem Vielfachen der Wechselfrequenz (M-Takt) der Magnetfeldpolarität (6) verglichen werden mit Fenster-Amplitudenwerten (25) des Frequenzspektrums der durch den Wechsel der Magnetfeldpolarität (6) realisierten Fensterfunktion, und dass ein identifiziertes Ereignis (22, 23) verworfen wird, wenn seine Amplitude kleiner ist als ein von dem Fenster-Amplitudenwert (25) bei der Ereignisfrequenz abhängiger Grenzwert, insbesondere wobei der Grenzwert der Fenster-Amplitudenwert selbst ist.

12. Magnetisch-induktives Durchflussmessgerät (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes (5) wechselnder Magnetfeldpolarität (6), mit einem Elektrodenpaar (7) zum Abgreifen einer in dem Medium induzierten elektrischen Spannung als Messsignal (8), wobei eine Signalverarbeitungsvorrichtung (24) aus dem Messsignal (8) Messdaten (10) gewinnt, die Signalverarbeitungsvorrichtung (24) die Messdaten (10) aus einem Zeitbereich in einen Frequenzbereich transformiert und wobei die Signalverarbeitungsvorrichtung das Messsignal (8) zu einem Durchflussmesswert (V_D) verarbeitet,
**dadurch gekennzeichnet,**
**dass** die Signalverarbeitungsvorrichtung (24) im Betriebszustand des magnetisch-induktiven Durchflussmessgeräts (2) aus dem Messsignal (8) zumindest einen Messdatensatz (9) mit polarisierten, von der Magnetfeldpolarität (6) abhängigen Messdaten (10) aus zeitlichen Bereichen (11) unterschiedlicher Magnetfeldpolarität (6) erzeugt, dass die Signalverarbeitungsvorrichtung (24) durch eine diskrete Frequenzanalyse (13) des Messdatensatzes (9) mit polarisierten Messdaten (10) wenigstens ein magnetfeldunabhängiges Frequenzspektrum (14) gewinnt,
**dass** die Signalverarbeitungsvorrichtung (24) aus dem Messdatensatz (9) mit polarisierten Messdaten (10) zumindest einen Messdatensatz (15) mit entpolarisierten Messdaten (16) ableitet (17), dass die Signalverarbeitungsvorrichtung (24) durch eine diskrete Frequenzanalyse (13) des Messdatensatzes (15) mit entpolarisierten Messdaten (16) wenigstens ein magnetfeldabhängiges Frequenzspektrum (18) gewinnt,
**dass** die Signalverarbeitungsvorrichtung (24) in einem Auswertungsschritt (19) durch Spitzenerkennung (20) die Amplitudenwerte (21) des magnetfeldunabhängigen Frequenzspektrums (14) auf wenigstens ein magnetfeldunabhängiges Ereignis (22) untersucht und/oder die Amplitudenwerte (21) des magnetfeldabhängigen Frequenzspektrums (18) auf wenigstens ein magnetfeldabhängiges Ereignis (23) untersucht und dass bei Identifikation eines magnetfeldunabhängigen Ereignisses (22) und/oder eines magnetfeldabhängigen Ereignisses (23), die Signalverarbeitungsvorrichtung (24) das Vorliegen des Ereignisses (22, 23) signalisiert.

13. Magnetisch-induktives Durchflussmessgerät (2) nach Anspruch 12 **dadurch gekennzeichnet, dass** zur Signalisierung des identifizierten Ereignisses (22, 23) ein entsprechendes Flag in dem Speicher gesetzt wird oder dass auf einer Anzeige des magnetisch-induktiven Durchflussmessgeräts (2) ein entsprechendes Signal angezeigt wird oder dass über eine Kommunikationsschnittstelle eine entsprechende Nachricht verschickt wird.

14. Magnetisch-induktives Durchflussmessgerät (2) nach Anspruch 12 oder 13 **dadurch gekennzeichnet, dass** die Signalverarbeitungsvorrichtung (24) so ausgestaltet ist, dass das magnetisch-induktive Durchflussmessgerät (2) im Betrieb die Verfahrensschritte gemäß dem Kennzeichnungsteil wenigstens eines Anspruchs der Ansprüche 2 bis 11 durchführt.

## Claims

1. Method (1) for operating a magnetic-inductive flowmeter (2) with a measuring tube (3) for guiding a medium, with a magnetic field generator (4) for generating a magnetic field (5) of alternating magnetic field polarity (6) passing through the measuring tube (3) perpendicular to the direction of flow of the medium, with a pair of electrodes (7) for tapping an electrical voltage induced in the medium as a measuring signal (8), wherein measurement data (10) obtained from the measuring signal (8) is transformed from a time domain into a frequency domain and the measuring signal (8) is processed at least into a flow measurement value (V_D),
**characterized in**
**that** at least one measurement data set (9) with polarized measurement data (10) dependent on the magnetic field polarity (6) from time domains (11) of different magnetic field polarity (6) is generated from the measuring signal (8), that at least one frequency spectrum (14) independent of the magnetic field is obtained by a discrete frequency analysis (13) of the measurement data set (9) with polarized measurement data (10), that at least one measurement data set (15) with depolarized measurement data (16) is derived (17) from the measurement data set (9) with polarized measurement data (10), that at least one magnetic field-dependent frequency spectrum (18) is obtained by a discrete frequency analysis (13) of the measurement data set (15) with depolarized measurement data (16),
**that** in an evaluation step (19), the amplitude values (21a) of the magnetic field-independent frequency spectrum (14) are examined for at least one magnetic field-independent event (22) by peak detection (20) and/or the amplitude values (21b) of the magnetic field-dependent frequency spectrum (18) are examined for at least one magnetic field-dependent event (23), and that when a magnetic field-independent event (22) and/or a magnetic field-dependent event (23) is identified, the presence of the event (22, 23) is signaled.

2. Method (1) according to claim 1, **characterized in that** for the derivation (17) of the measurement data set (15) with depolarized measurement data (16) from the measurement data set (9) with polarized measurement data (10), the measurement data (10) of the measurement data set (9) with polarized measurement data (10) from times of a specific magnetic field polarity (6) are multiplied by -1.

3. Method (1) according to claim 1 or 2, **characterized in that** at least one constant component is calculated from the measurement data (10) of the measurement data set (9) with polarized measurement data (10) and the constant component is subtracted from the measurement data (10) of the measurement data set (9) with polarized measurement data (10), in particular wherein a constant component is calculated for each contiguous time domain (11) of a determined magnetic field polarity (6) and the constant component is subtracted from the measurement data (10) from exactly this contiguous time domain, or wherein a constant component is calculated for several contiguous time domains (11) of a determined magnetic field polarity (6) and the constant component is subtracted from the measurement data (10) from exactly these contiguous time domains.

4. Method (1) according to claim 3, **characterized in that** the measurement data set (15) with depolarized measurement data (16) is derived (17) from the measurement data set (9) with polarized measurement data (10) after the constant component has been subtracted from the measurement data (10) of the measurement data set (9) with polarized measurement data (10), so that the measurement data set (9) with polarized measurement data (10) and the measurement data set (15) with depolarized measurement data (16) are both cleared of a constant component.

5. Method (1) according to any one of claims 1 to 4, **characterized in that** a specific portion of measurement data (10) is discarded or set to zero after the magnetic field polarity (6) has changed, or no measurement data (10) is captured from the measuring signal (8) for a certain time after the magnetic field polarity (6) has changed, in particular wherein the measurement data (10) are discarded, are set to zero or are not captured which fall within a time domain (11) of a transient magnetic field course, in particular wherein the time domain (11) of the transient magnetic field course is deemed to have ended when 95% of the final magnetic field strength has been reached, preferably when 98% of the final magnetic field strength has been reached.

6. Method (1) according to any one of claims 1 to 5, **characterized in that** the number of measurement data (10) in the measurement data set (9) with polarized measurement data (10) and thus the number of measurement data (16) in the measurement data set (15) with depolarized measurement data (16) is determined from a desired spectral resolution of the magnetic field-dependent frequency spectrum (18) and the magnetic field-independent frequency spectrum (14) as well as the measuring signal sampling rate, at which the measurement data (10) are obtained from the measuring signal (8), in particular wherein the measuring signal sampling rate and an alternating frequency (M-cycle) at which the magnetic field polarity (6) is changed are adapted to one another in such a way that the measuring signal sampling rate is an integer multiple of the alternating frequency (M-cycle) of the magnetic field polarity (6).

7. Method (1) according to any one of claims 1 to 6, **characterized in that** the measurement data set (9) with polarized measurement data (10) and/or the measurement data set (15) with depolarized measurement data (16) is provided with a window function for forcing transitions between the measurement data (10, 16) from the start range and the measurement data (10, 16) from the end range of a measurement data set (9, 15) on which the frequency analyses (13) are based, wherein the von Hanning window or the Blackman window is preferably used as the window function.

8. Method (1) according to any one of claims 1 to 7, **characterized in that** a magnetic field-independent event (22) identified at an event frequency in the magnetic field-independent frequency spectrum (14) is subjected to a plausibility check by checking whether identified or identifiable adjacent events (22a. 22b) exist which have a frequency spacing from the event frequency of the identified magnetic field-independent event (22) of twice the alternating frequency (M-cycle) of the magnetic field polarity (6), in particular wherein in the case of an identified magnetic field-independent event (22) the neighboring events (22a, 22b) are present symmetrically to the event frequency of the magnetic field-independent event (22).

9. Method (1) according to any one of claims 1 to 8, **characterized in that** a magnetic field-dependent event (23) identified at an event frequency in the magnetic field-dependent frequency spectrum (18) is subjected to a plausibility check by checking whether identified or identifiable adjacent events (23a, 23b) exist, which have a frequency spacing from the event frequency of the identified magnetic field-dependent event (23) of the simple alternating frequency (M-cycle) of the magnetic field polarity (6), in particular wherein in the case of an identified magnetic field-dependent event (23) the neighboring events (23a, 23b) are present symmetrically to the event frequency of the magnetic field-dependent event (23).

10. Method (1) according to any one of claims 1 to 9, **characterized in that** an averaged frequency spectrum is calculated by averaging a plurality of magnetic field-dependent frequency spectra (18) and/or by averaging a plurality of magnetic field-independent frequency spectra (14), and the averaged frequency spectrum is subtracted from the magnetic field-dependent frequency spectrum (18) and/or from the magnetic field-independent frequency spectrum (14) before performing the evaluation step (19).

11. Method (1) according to any one of claims 1 to 10, **characterized in that**, in the evaluation step (19), amplitude values of identified events (22, 23) having an event frequency at a multiple of the alternating frequency (M-cycle) of the magnetic field polarity (6) are compared with window amplitude values (25) of the frequency spectrum of the window function implemented by the alternation of the magnetic field polarity (6), and that an identified event (22, 23) is discarded if its amplitude is smaller than a limit value dependent on the window amplitude value (25) at the event frequency, in particular wherein the limit value is the window amplitude value itself.

12. Magnetic-inductive flowmeter (2) with a measuring tube (3) for guiding a medium, with a magnetic field generator (4) for generating a magnetic field (5) of alternating magnetic field polarity (6) passing through the measuring tube (3) perpendicular to the direction of flow of the medium, with a pair of electrodes (7) for tapping an electrical voltage induced in the medium as a measuring signal (8), wherein a signal processing device (24) obtains measurement data (10) from the measuring signal (8), the signal processing device (24) transforms the measurement data (10) from a time domain into a frequency domain and wherein the signal processing device processes the measuring signal (8) into a flow measurement value (V_D),
**characterized in**
**that** the signal processing device (24) in the operating state of the magnetic-inductive flowmeter (2) generates from the measuring signal (8) at least one set of measurement data (9) with polarized measurement data (10) dependent on the magnetic field polarity (6) from time domains (11) of different magnetic field polarity (6), that the signal processing device (24) obtains at least one frequency spectrum (14) independent of the magnetic field by a discrete frequency analysis (13) of the measurement data set (9) with polarized measurement data (10),
**that** the signal processing device (24) derives (17) at least one measurement data set (15) with depolarized measurement data (16) from the measurement data set (9) with polarized measurement data (10), that the signal processing device (24) obtains at least one magnetic field-dependent frequency spectrum (18) by a discrete frequency analysis (13) of the measurement data set (15) with depolarized measurement data (16),
**that**, in an evaluation step (19), the signal processing device (24) examines the amplitude values (21) of the magnetic field-independent frequency spectrum (14) for at least one magnetic field-independent event (22) by peak detection (20) and/or examines the amplitude values (21) of the magnetic field-dependent frequency spectrum (18) for at least one magnetic field-dependent event (23) and that upon identification of a magnetic field-independent event (22) and/or a magnetic field-dependent event (23), the signal processing device (24) signals the presence of the event (22, 23).

13. Magnetic-inductive flowmeter (2) according to claim 12, **characterized in that** a corresponding flag is set in the memory to signal the identified event (22, 23) or that a corresponding signal is shown on a display of the magnetic-inductive flowmeter (2) or that a corresponding message is sent via a communication interface.

14. Magnetic-inductive flowmeter (2) according to claim 12 or 13, **characterized in that** the signal processing device (24) is designed in such a way that the magnetic-inductive flowmeter (2) performs the method steps according to the characterizing portion of at least one of claims 2 to 11 during operation.

## Revendications

1. Procédé (1) pour faire fonctionner un débitmètre magnéto-inductif (2) comprenant un tube de mesure (3) destiné à guider un fluide, comprenant un dispositif générateur de champ magnétique (4) destiné à générer un champ magnétique (5) à polarité de champ magnétique (6) changeante traversant le tube de mesure (3) perpendiculairement à la direction d'écoulement du fluide, comprenant une paire d'électrodes (7) destinées à détecter une tension électrique induite dans le fluide en tant que signal de mesure (8), les données de mesure (10) obtenues à partir du signal de mesure (8) étant transformées d'un domaine temporel en un domaine fréquentiel et le signal de mesure (8) étant traité au moins en une valeur de mesure de débit (V_D),
**caractérisé en ce**
**qu'**au moins un jeu de données de mesure (9) avec des données de mesure polarisées (10) dépendantes de la polarité de champ magnétique (6) issues de domaines temporels (11) de polarité de champ magnétique (6) différente est généré à partir du signal de mesure (8), en ce qu'au moins un spectre de fréquences indépendant du champ magnétique (14) est obtenu par une analyse de fréquence discrète (13) du jeu de données de mesure (9) avec des données de mesure polarisées (10), en ce qu'au moins un jeu de données de mesure (15) avec des données de mesure dépolarisées (16) est dérivé (17) à partir du jeu de données de mesure (9) avec des données de mesure polarisées (10), en ce qu'au moins un spectre de fréquences dépendant du champ magnétique (18) est obtenu par une analyse de fréquence discrète (13) du jeu de données de mesure (15) avec des données de mesure dépolarisées (16),
en ce que dans une étape d'évaluation (19), les valeurs d'amplitude (21a) du spectre de fréquences indépendant du champ magnétique (14) sont examinées par détection de pics (20) afin d'identifier au moins un événement indépendant du champ magnétique (22) et/ou les valeurs d'amplitude (21b) du spectre de fréquences dépendant du champ magnétique (18) sont examinées afin d'identifier au moins un événement dépendant du champ magnétique (23) et en ce que lors de l'identification d'un événement indépendant du champ magnétique (22) et/ou d'un événement dépendant du champ magnétique (23), la présence de l'événement (22, 23) est signalée.

2. Procédé (1) selon la revendication 1, **caractérisé en ce que**, pour la dérivation (17) du jeu de données de mesure (15) avec des données de mesure dépolarisées (16) à partir du jeu de données de mesure (9) avec des données de mesure polarisées (10), les données de mesure (10) du jeu de données de mesure (9) avec des données de mesure polarisées (10) provenant de moments d'une polarité de champ magnétique (6) déterminée sont multipliées par -1.

3. Procédé (1) selon la revendication 1 ou 2, **caractérisé en ce qu'**au moins une composante continue est calculée à partir des données de mesure (10) du jeu de données de mesure (9) avec des données de mesure polarisées (10) et la composante continue est soustraite des données de mesure (10) du jeu de données de mesure (9) avec des données de mesure polarisées (10), une composante continue étant notamment calculée pour chaque domaine temporel contigu (11) d'une polarité de champ magnétique (6) déterminée et la composante continue étant soustraite des données de mesure (10) qui proviennent précisément de ce domaine temporel contigu, ou une composante continue étant calculée pour plusieurs domaines temporels contigus (11) d'une polarité de champ magnétique (6) déterminée et la composante continue étant soustraite des données de mesure (10) qui proviennent précisément de ces domaines temporels contigus.

4. Procédé (1) selon la revendication 3, **caractérisé en ce que** le jeu de données de mesure (15) avec des données de mesure dépolarisées (16) est dérivé (17) du jeu de données de mesure (9) avec des données de mesure polarisées (10) après que la composante continue ait été soustraite des données de mesure (10) du jeu de données de mesure (9) avec des données de mesure polarisées (10), de telle sorte que le jeu de données de mesure (9) avec des données de mesure polarisées (10) et le jeu de données de mesure (15) avec des données de mesure dépolarisées (16) soient tous deux débarrassés d'une composante continue.

5. Procédé (1) selon l'une des revendications 1 à 4, **caractérisé en ce qu'**une partie déterminée des données de mesure (10) est rejetée ou mise à zéro après le changement de polarité de champ magnétique (6) ou, après le changement de polarité de champ magnétique (6), aucune donnée de mesure (10) n'est capturée à partir du signal de mesure (8) pendant un certain temps, en particulier les données de mesure (10) qui tombent dans un domaine temporel (11) d'un tracé de champ magnétique transitoire étant rejetées, mises à zéro ou non capturées, en particulier le domaine temporel (11) du tracé de champ magnétique transitoire étant considérée comme terminée lorsque 95 % de l'intensité de champ magnétique finale est atteinte, de préférence lorsque 98 % de l'intensité de champ magnétique finale est atteinte.

6. Procédé (1) selon l'une des revendications 1 à 5, **caractérisé en ce que** le nombre de données de mesure (10) dans le jeu de données de mesure (9) avec des données de mesure polarisées (10) et ainsi le nombre de données de mesure (16) dans le jeu de données de mesure (15) avec des données de mesure dépolarisées (16) est déterminé à partir d'une résolution spectrale souhaitée du spectre de fréquences dépendant du champ magnétique (18) et du spectre de fréquences indépendant du champ magnétique (14) ainsi que de la fréquence d'échantillonnage du signal de mesure avec laquelle les données de mesure (10) sont obtenues à partir du signal de mesure (8), en particulier la fréquence d'échantillonnage du signal de mesure et une fréquence de changement (M-Takt) avec laquelle la polarité du champ magnétique (6) est changée sont assorties l'une à l'autre de telle sorte que la fréquence d'échantillonnage du signal de mesure soit un multiple entier de la fréquence de changement (M-Takt) de la polarité du champ magnétique (6).

7. Procédé (1) selon l'une des revendications 1 à 6, **caractérisé en ce que** le jeu de données de mesure (9) avec des données de mesure polarisées (10) et/ou le jeu de données de mesure (15) avec des données de mesure dépolarisées (16) est traité avec une fonction de fenêtre pour forcer des transitions aussi exemptes que possible de points de saut entre les données de mesure (10, 16) issues de la plage initiale et les données de mesure (10, 16) issues de la plage finale d'un jeu de données de mesure (9, 15) sur lequel sont basées les analyses de fréquence (13), la fenêtre de Hanning ou la fenêtre de Blackman étant de préférence utilisée comme fonction de fenêtre.

8. Procédé (1) selon l'une des revendications 1 à 7, **caractérisé en ce qu'**un événement indépendant du champ magnétique (22) identifié à une fréquence d'événement dans le spectre de fréquences indépendant du champ magnétique (14) est soumis à un contrôle de plausibilité consistant çà vérifier s'il existe des événements voisins (22a, 22b) identifiés ou identifiables qui ont un écart de fréquence par rapport à la fréquence d'événement de l'événement indépendant du champ magnétique identifié (22) qui est le double de la fréquence de changement (M-Takt) de la polarité du champ magnétique (6), les événements voisins (22a, 22b) étant notamment symétriques par rapport à la fréquence d'événement de l'événement indépendant du champ magnétique (22) dans le cas d'un événement indépendant du champ magnétique (22) identifié.

9. Procédé (1) selon l'une des revendications 1 à 8, **caractérisé en ce qu'**un événement dépendant du champ magnétique (23) identifié à une fréquence d'événement dans le spectre de fréquences dépendant du champ magnétique (18) est soumis à un contrôle de plausibilité consistant à vérifier s'il existe des événements voisins (23a, 23b) identifiés ou identifiables qui ont un écart de fréquence par rapport à la fréquence d'événement de l'événement dépendant du champ magnétique identifié (23) qui est égal à la fréquence de changement (M-Takt) de la polarité du champ magnétique (6), les événements voisins (23a, 23b) étant notamment symétriques par rapport à la fréquence d'événement de l'événement dépendant du champ magnétique (23) dans le cas d'un événement dépendant du champ magnétique (23) identifié.

10. Procédé (1) selon l'une des revendications 1 à 9, **caractérisé en ce qu'**un spectre de fréquences moyen est calculé en faisant la moyenne d'une pluralité de spectres de fréquences dépendants du champ magnétique (18) et/ou en faisant la moyenne d'une pluralité de spectres de fréquences indépendants du champ magnétique (14) et en soustrayant le spectre de fréquences moyen avant l'exécution de l'étape d'évaluation (19) du spectre de fréquences dépendant du champ magnétique (18) et/ou du spectre de fréquences indépendant du champ magnétique (14).

11. Procédé (1) selon l'une des revendications 1 à 10, **caractérisé en ce que**, lors de l'étape d'évaluation (19), les valeurs d'amplitude d'événements identifiés (22, 23) avec une fréquence d'événement à un multiple de la fréquence de changement (M-Takt) de la polarité de champ magnétique (6) sont comparées à des valeurs d'amplitude de fenêtre (25) du spectre de fréquences de la fonction de fenêtre réalisée par le changement de polarité de champ magnétique (6), et **en ce qu'**un événement identifié (22, 23) est rejeté lorsque son amplitude est inférieure à une valeur limite dépendante de la valeur d'amplitude de fenêtre (25) à la fréquence d'événement, la valeur limite étant en particulier la valeur d'amplitude de fenêtre elle-même.

12. Débitmètre magnéto-inductif (2) comprenant un tube de mesure (3) destiné à guider un fluide, comprenant un dispositif générateur de champ magnétique (4) destiné à générer un champ magnétique (5) à polarité de champ magnétique (6) changeante traversant le tube de mesure (3) perpendiculairement à la direction d'écoulement du fluide, comprenant une paire d'électrodes (7) destinées à détecter une tension électrique induite dans le fluide en tant que signal de mesure (8), un dispositif de traitement de signal (24) obtenant des données de mesure (10) à partir du signal de mesure (8), le dispositif de traitement de signal (24) transformant les données de mesure (10) d'un domaine temporel en un domaine fréquentiel et le dispositif de traitement de signal traitant le signal de mesure (8) en une valeur de mesure de débit (V_D),
**caractérisé en ce**
**que** le dispositif de traitement de signal (24), à l'état de fonctionnement du débitmètre magnéto-inductif (2), génère à partir du signal de mesure (8) au moins un jeu de données de mesure (9) comprenant des données de mesure polarisées (10) dépendantes de la polarité de champ magnétique (6) et provenant de domaines temporels (11) de polarité de champ magnétique (6) différente, en ce que le dispositif de traitement de signaux (24) obtient, par une analyse de fréquence discrète (13) du jeu de données de mesure (9) avec des données de mesure polarisées (10), au moins un spectre de fréquences indépendant du champ magnétique (14),
en que le dispositif de traitement de signal (24) dérive (17) à partir du jeu de données de mesure (9) avec des données de mesure polarisées (10), au moins un jeu de données de mesure (15) avec des données de mesure dépolarisées (16), en ce que le dispositif de traitement de signal (24) obtient, par une analyse de fréquence discrète (13) du jeu de données de mesure (15) avec des données de mesure dépolarisées (16), au moins un spectre de fréquences dépendant du champ magnétique (18),
en ce que le dispositif de traitement de signal (24), dans une étape d'évaluation (19), examine les valeurs d'amplitude (21) du spectre de fréquences indépendant du champ magnétique (14) par détection de pics (20) afin d'identifier au moins un événement indépendant du champ magnétique (22) et/ou les valeurs d'amplitude (21) du spectre de fréquences dépendant du champ magnétique (18) afin d'identifier au moins un événement dépendant du champ magnétique (23) et en ce que lors de l'identification d'un événement indépendant du champ magnétique (22) et/ou d'un événement dépendant du champ magnétique (23), le dispositif de traitement de signal (24) signale la présence de l'événement (22, 23).

13. Débitmètre magnéto-inductif (2) selon la revendication 12, **caractérisé en ce que**, pour la signalisation de l'événement identifié (22, 23), un indicateur correspondant est activé dans la mémoire ou **en ce qu'**un signal correspondant est affiché sur un indicateur du débitmètre magnéto-inductif (2) ou **en ce qu'**un message correspondant est envoyé par le biais d'une interface de communication.

14. Débitmètre magnéto-inductif (2) selon la revendication 12 ou 13, **caractérisé en ce que** le dispositif de traitement de signal (24) est conçu de telle sorte que le débitmètre magnéto-inductif (2) exécute, en fonctionnement, les étapes de procédé conformément à la partie caractéristique d'au moins l'une des revendications 2 à 11.
